Europäisches Patentamt

European Patent Office

Office européen des brevets

(19)

(11) **EP 0 480 413 B1**

(12) **EUROPEAN PATENT SPECIFICATION**

(45) Date of publication and mention
of the grant of the patent:
**14.01.1998 Bulletin 1998/03**

(51) Int Cl.6: **G01S 13/02**, G06K 7/10

(21) Application number: **91117272.4**

(22) Date of filing: **10.10.1991**

(54) **Responder in movable-object identification system**

Antwortgerät zur Anwendung in einem System zur Identifizierung von bewegbaren Objekten

Répondeur pour l'utilisation dans un système d'identification d'objets mobiles

(84) Designated Contracting States:
**DE FR GB IT**

(30) Priority: **10.10.1990 JP 273039/90**
**26.11.1990 JP 321474/90**

(43) Date of publication of application:
**15.04.1992 Bulletin 1992/16**

(73) Proprietor: **DENSO CORPORATION**
**Kariya-City, Aichi-Pref. (JP)**

(72) Inventors:
• **Hirata, Tatsuya**
**Ichinomiya-shi, Aichi-ken (JP)**
• **Kago, Yoshiyuki**
**Nishio-shi, Aichi-ken (JP)**

(74) Representative: **KUHNEN, WACKER & PARTNER**
**Patent- und Rechtsanwaltsbüro,**
**Alois-Steinecker-Strasse 22**
**85354 Freising (DE)**

(56) References cited:
**EP-A- 0 254 954** **EP-A- 0 301 127**
**EP-A- 0 323 011** **FR-A- 2 260 115**
**FR-A- 2 593 761**

EP 0 480 413 B1

## Description

This invention relates to a responder or a transponder in a movable-object identification system.

There are known movable-object identification systems in which a responder (a transponder) mounted on a movable object can communicate with a fixed interrogator by radio. When the responder receives an interrogation signal (a challenge signal) from the interrogator, the responder automatically transmits a reply signal including identification information related to the movable object.

In some cases, an identification-code generator of a responder includes a memory storing various pieces of identification information, and the identification-code generator consumes an appreciable rate of dc power.

Some responders derive dc power from radio wave energy induced in an antenna. Specifically, such a responder has two antennas. One of the antennas is used for deriving dc power. A received signal induced in the other antenna is used as a carrier for a transmission signal. The two-antenna design is disadvantageous in compactness.

Japanese published unexamined patent application 1-218965 discloses a responder having a single antenna. In the responder of Japanese application 1-218965, a received interrogation signal induced in the antenna is divided by a distribution device into two, one being used for starting a CPU while the other being used as a carrier for a transmission signal. Specifically, the responder of Japanese application 1-218965 includes a diode for subjecting the part of the interrogation signal to a detection process, and a comparator for converting the level of the output detection signal from the diode into a binary CPU start control signal. The distribution device generally occupies a considerable space, so that the transponder of Japanese application 1-218965 tends to be large.

FR-A-2 593 761 discloses a stationary system for identifying a vehicle moving past the detection point. The stationary system radiates a higher frequency signal via a transmitting antenna to a receiving antenna mounted on the vehicle. The receiving antenna is connected with a circulator dividing the energy received by the receiving antenna into two equal parts one of which is fed to a demodulator and a delay means. The other part of the energy is fed to a modulator being additionally supplied with the output of the delay means. The modulator generates an output signal which is dependent on the delay time of the delay means. The output signal of the modulator is fed to a second antenna mounted on the vehicle which transmits this signal to a receiving antenna mounted on the stationary interrogator.

EP-A-323 011 is directed to a transponder for modulating signals from a radar and for reflecting the modulated signals back to the radar in order to transmit information from the transponder to the radar. The received radio wave is used to start the charging of capacitors. A series-connected transistor is rendered conductive after charging of the capacitors so that an encoder connected with the transistor begins to generate a two-level pulse signal which switches the transistor on and off in order to generate the reply signal.

It is an object of this invention to provide an improved responder in a movable-object identification system.

This object is achieved by a movable-object identification system according to the appended claim.

Fig. 1 is a diagram of a movable-object identification system including a responder according to a first embodiment of this invention.

Fig. 2 is a diagram of the identification code generator of Fig. 1.

Fig. 3 is a schematic diagram of the modulator of Fig. 1.

Fig. 4 is a schematic diagram of the rectifier of Fig. 1.

Fig. 5 is a schematic diagram of a modulation/rectification complex circuit in a second embodiment of this invention.

Fig. 6 is a schematic diagram of a modulation/rectification complex circuit in a third embodiment of this invention.

Fig. 7 is a block diagram of a modulation/rectification complex circuit in a fourth embodiment of this invention.

Fig. 8A is a schematic diagram of the power distribution device of Fig. 7.

Fig. 8B is a schematic diagram of a power distribution device in a fifth embodiment of this invention.

Fig. 9 is a schematic diagram of a modulator in a sixth embodiment of this invention.

Fig. 10 is a schematic diagram of a rectifier in a seventh embodiment of this invention.

Fig. 11 is a block diagram of a modulation/rectification complex circuit in an eighth embodiment of this invention.

Fig. 12 is a block diagram of the demodulator of Fig. 11.

Fig. 13 is a block diagram of a modulation/rectification complex circuit in a ninth embodiment of this invention.

## DESCRIPTION OF THE FIRST PREFERRED EMBODIMENT

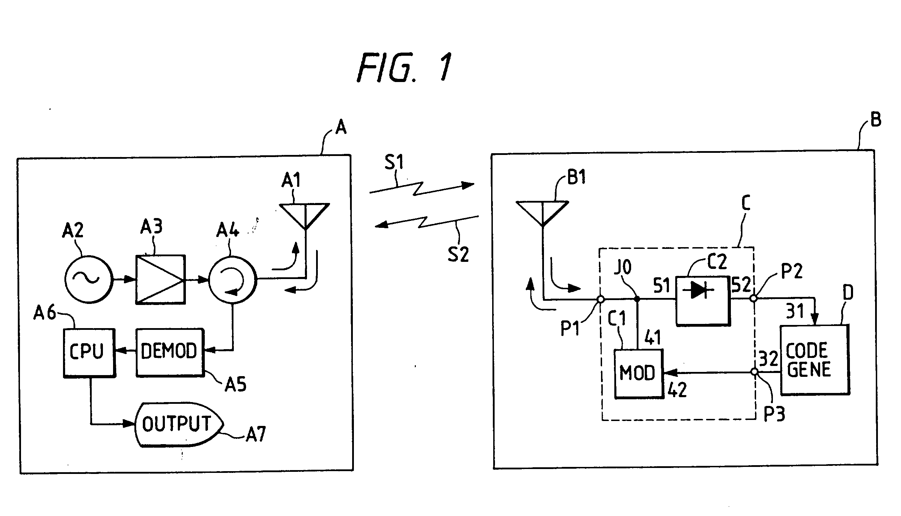

With reference to Fig. 1, a movable-object identification system includes a fixed station A and a mobile station B which can communicate with each other by radio. The fixed station A includes an interrogator. The mobile station B is mounted on a movable object such as a vehicle or a movable article. The mobile station B includes a responder (a transponder).

The responder B receives an RF interrogation signal (a challenge signal) S1 from the interrogator A, and modulates the received interrogation signal S1 with identification information assigned to the related movable body and converts the received interrogation signal S1 into an RF modulation signal S2 including the identification information. The identification information includes, for example, an identification (ID) code or codes. Then, the responder B transmits the modulation signal S2 toward the interrogator A as a reply signal.

The interrogator A transmits the interrogation signal S1 into a predetermined area. The responder B on the movable object within the predetermined area receives the interrogation signal S1 and transmits the reply signal S2. The interrogator A receives the reply signal S2 and demodulates the identification information from the received reply signal S2. The interrogator A identifies the movable object by referring to the demodulated identification information.

As shown in Fig. 1. the interrogator A includes an oscillator A2 for outputting an interrogation signal S1 which is fed to an antenna A1 via an amplifier A3 and a circulator A4. The interrogation signal S1 is radiated from the antenna A1. A reply signal S2 induced in the antenna 1 is fed to a demodulator A5 via the circulator A4. The circulator A4 serves to separate a transmission signal and a reception signal, and the antenna A1 is used in common for both transmission and reception. The demodulator A5 recovers identification information from the received reply signal S2. A CPU A6 within the interrogator A analyzes the demodulated identification information. The result of the analysis can be transmitted from the CPU A6 to an external device (not shown) via an output device A7.

As shown in Fig. 1, the responder B includes an antenna B1. An interrogation signal S1 induced in the antenna B1 is fed via a terminal P1 to a modulator C1 and a rectifier C2 within a modulation/rectification complex circuit C. The terminal P1 leads to the modulator C1 and the rectifier C2 via a junction or a branch point J0. A part of the interrogation signal S1 is accepted by the rectifier C2, and is rectified by the rectifier C2 into dc power. The output dc power from the rectifier C2 is fed via a terminal P2 to an identification code generator D to activate the latter. The identification code generator D includes a memory for storing identification information. The identification code generator D generates an identification code signal on the basis of the identification information read out from the memory. The identification code signal is fed from the identification code generator D to the modulator C1 via a terminal P3 as a modulating signal. Another part of the interrogation signal S1 is accepted by the modulator C1, and is modulated with the identification code signal by the modulator C1 so that the part of the interrogation signal S1 is converted into a reply signal S2 including the identification information. The modulator C1 reflects and returns the reply signal S2, and the reply signal S2 is fed back to the antenna B1 via the terminal P1. The reply signal S2 is radiated from the antenna B1.

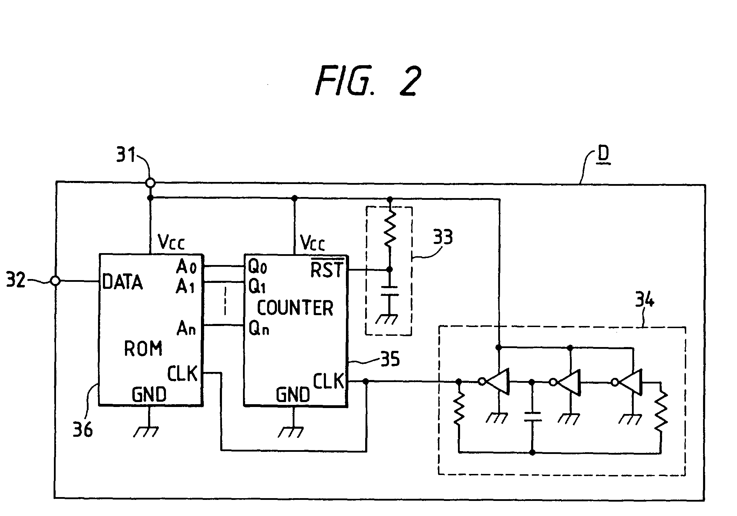

As shown in Fig. 2, the identification code generator D includes a read-only memory (a ROM) 36, an address counter 35, a clock signal generator 34, and a reset circuit 33. The ROM 36 stores different identification information data which are designated by different addresses respectively. When a dc power is fed to the devices 33-36 within the identification code generator D from the rectifier C2 (see Fig. 1) via a power supply input terminal 31, the devices 33-36 are activated by the dc power and they start to operate. Firstly, the reset circuit 33 clears the contents of the address counter 35, and resets the output address signal from the address counter 35 to an initial state. Then, the output address signal from the address counter 35 is updated each time the address counter 35 receives a clock pulse from the clock signal generator 34. The address signal is outputted from output terminals $Q_0$-$Q_n$ of the address counter 35 to input terminals $A_0$-$A_n$ of the ROM 36. The ROM 36 outputs identification information data which is designated by the input address signal. Since the address signal is periodically updated in response to the clock pulses, a sequence of identification information data is outputted from the ROM 36. The identification information data (the identification information signal) is outputted from a data terminal of the ROM 36, and is then transmitted to the modulator C1 (see Fig. 1) via a terminal 32.

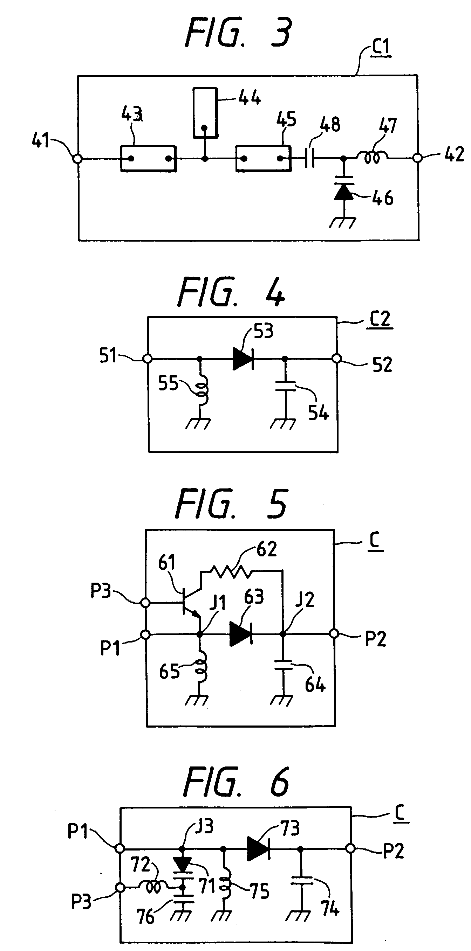

As shown in Fig. 3, the modulator C1 includes terminals 41 and 42 which are connected to the antenna B1 and the identification code generator D (see Fig. 1) respectively. The modulator C1 also includes a phase-conversion transmission line 43, a load-conversion stub 44, a load-conversion transmission line 45, a variable capacitance diode 46, an inductor 47, and a dc-cut capacitor 48. The phase-conversion transmission line 43, the load-conversion stub 44, and the load conversion transmission line 45 are combined into a T-network. The terminal 41 is connected to one end of the dc-cut capacitor 48 via the phase-conversion transmission line 43 and the load-conversion transmission line 45. An end of the load-conversion stub 44 is connected to a junction between the phase-conversion transmission line 43 and the load-conversion transmission line 45. The other end of the dc-cut capacitor 48 is connected to the cathode of the variable capacitance diode 46 and one end of the inductor 47. The anode of the variable capacitance diode 46 is grounded. The other end of the inductor 47 is connected to the terminal 42. The inductor 47 forms a low pass filter.

The identification information signal outputted from the identification code generator D (see Fig. 1) is transmitted to the variable capacitance diode 46 via the terminal 42 and the inductor 47. The impedance of the variable capacitance diode 46 varies in accordance with the identification information signal. The T-network of the phase-conversion transmission line 43, the load-conversion stub 44, and the load conversion transmission line 45 is coupled to the variable capacitance diode 46 via the dc-cut capacitor 48. A part of the received interrogation signal S1 advances into the T-network via the terminal 41. The previously-mentioned variation in the impedance of the variable capacitance diode 46 causes a variation in an impedance at the terminal 41, so that the part of the received interrogation signal S1 is modulated in accordance with the identification information signal. Circuit constants of the modulator C1 are chosen so that the minimum value of the impedance at the terminal 41 will be sufficiently or appreciably remote from zero. By the modulation, the part of the interrogation signal S1 is converted into a reply signal S2 containing the identification information. The reply signal S2 is reflected at the T-network, and is returned toward the antenna B1 (see Fig. 1) via the terminal 41.

As shown in Fig. 4, the rectifier C2 includes terminals 51 and 52 connected to the antenna B1 and the identification code generator D (see Fig. 1) respectively. The rectifier C2 also includes a diode 53, a smoothing capacitor 54, and an inductor 55. The anode of the diode 53 is connected to the terminal 51, and the cathode of the diode 53 is connected to the terminal 52. One end of the inductor 55 is connected to the terminal 51, and the other end of the inductor 55 is grounded. The inductor 55 forms a dc return low pass filter. One end of the smoothing capacitor 54 is connected to the cathode of the diode 53, and the other end of the smoothing capacitor 54 is grounded. A large part of the received interrogation signal S1 advances into the rectifier C2 via the terminal 51, being rectified by the diode 53 and being smoothed by the smoothing capacitor 54 into a dc power. The output dc power from the rectifier C2 is transmitted via the terminal 52 to the identification code generator D (see Fig. 1).

It should be noted that the diode 53 in the rectifier C2 may be replaced by a combination of diodes which serves as a full-wave rectifier.

This embodiment of this invention has the following advantages. As understood from the previous description. a part of electric energy of the interrogation signal is converted by the rectifier C2 into a dc power which is used as a power supply for the responder B. Thus, it is unnecessary to provide an additional power supply such as a battery or a cell in the responder B. In addition, only a single antenna suffices in the responder B. Specifically, the antenna B1 of the responder B is used in three ways, that is, signal reception, signal transmission, and power capture.

A further description will be given of the modification/rectification complex circuit C which forms a load for the antenna B1. It is now assumed that the rectifier C2 has good input matching conditions and the normalized admittance Yd of the rectifier C2 equals 1. Furthermore, it is assumed that the modulator C1 is designed as a phase modulator for changing a signal phase between 90° and -90°. In this case, the normalized admittance Ym of the phase modulator is expressed as " $Ym = \pm j$ ".

Since the modulation/rectification complex circuit C forms a load for the antenna B1, the resultant admittance Y and the reflection coefficient $\Gamma$ of the complex circuit C are expressed in the following equations.

$$Y = Yd + Ym = 1 \pm j$$

$$\Gamma = 0.45 \angle \pm 117°$$

where the reflection coefficient $\Gamma$ is a vector having a magnitude of 0.45 and directions of $\angle \pm 117°$. It should be noted that the character "$\angle$" denotes that the following values are angles. Under these conditions, the modulation characteristics of the responder B which are observed from the interrogator A correspond to phase modulation having an absolute reflection coefficient of 0.45 and a phase difference (deviation) of 126°.

Regardless of the conditions of the modulation, 20% of electric power received by the antenna B1 is used for a reply signal S2, and the remaining 80% is used for a dc power. Only 20% of the electric power suffices for the reply signal S2 since even a small power of the reply signal S2 enables the transmission of the identification information from the responder B to the interrogator A.

In general, the loss in the modulator C1 increases as the conductance of the modulator C1 increases. In addition, the ratio of an electric power radiated from the antenna B1 to an electric power received by the antenna B1 increases as the susceptance of the modulator C1 increases. Thus, the modulator C1 is preferably designed as a phase modulator having a very small conductance and a moderate susceptance (a susceptance not excessively large).

In the case where the impedance of the modulator C1 is equal or very close to 0, the conductance or the susceptance of the modulator C1 is extremely large. Thus, the impedance of the modulator C1 is preferably set to a value appreciably separate from 0.

The modulator C1 may be designed as a phase modulator for changing a signal phase between 45° and -45° or a phase modulator for changing a signal phase between 120° and 0°.

The modulator C1 may also be designed as an amplitude modulator having an impedance changeable between a matching load impedance and an infinite impedance. The amplitude modulator C1 will be further described hereinafter. The normalized admittance Ym of the amplitude modulator C1 is changed between 1 and 0. The resultant admittance Y of the complex circuit C is changed between 2 and 1. Under these conditions, the modulation characteristics of the responder B which are observed from the interrogator A correspond to amplitude modulation having a reflection coefficient $\Gamma$ changed between 0.33 and 0. From the averaging standpoint, about 6% of electric power received by the antenna B1 is used for a reply signal S2, and about 72% is used for a dc power and the remaining 22% is lost in the amplitude modulator C1.

## DESCRIPTION OF THE SECOND PREFERRED EMBODIMENT

A second embodiment of this invention is similar to the embodiment of Figs. 1-4 except for the design of a modulation/rectification complex circuit C.

As shown in Fig. 5, the modulation/rectification complex circuit C in the second embodiment includes terminals P1, P2, and P3. The terminal P1 leads from an antenna B1 (see Fig. 1). The terminal P2 leads to a power supply terminal of an identification code generator D (see Fig. 1). The terminal P3 leads from an output terminal of the identification code generator D. The modulation/rectification complex circuit C includes a diode 63 connected between the terminals P1 and P2. An inductor 65 forms a dc return low pass filter. One end of the inductor 65 is connected to the terminal P1, and the other end of the inductor 65 is grounded. One end of a smoothing capacitor 64 is connected to the terminal P2, and the other end of the smoothing capacitor 64 is grounded. A transistor 61 forms a switching element. The base of the transistor 61 is connected to the terminal P3. The emitter of the transistor 61 is connected to a junction J1 between the terminal P1 and the diode 63. The collector of the transistor 61 is connected via a resistor 62 to a junction J2 between the diode 63 and the terminal P2. The emitter-collector path of the transistor 61 and the resistor 62 compose a bypass circuit for the diode 63.

A large part of a received interrogation signal S1 advances from the antenna B1 (see Fig. 1) into the diode 63 via the terminal P1, being rectified by the diode 63 and being smoothed by the smoothing capacitor 64 into a dc power. The dc power is fed via the terminal P2 to the identification code generator D (see Fig. 1) to activate the latter. When being activated, the identification code generator D outputs an identification information signal which is applied to the base of the transistor 61 via the terminal P3. The transistor 61 changes between an on state and an off state in response to the identification information signal so that the bypass circuit for the diode 63 is closed and opened in response to the identification information signal. Thus, operating conditions of the diode 63 are changed in response to the identification information signal. Therefore, the characteristics of the reflection of the interrogation signal S1 at the modulation/rectification complex circuit C vary in response to the identification information signal. As a result, a part of the interrogation signal S1 is modulated with the identification information signal and is thus converted into a reply signal S2 containing the identification information, and the reply signal S2 is reflected and returned toward the antenna B1 (see Fig. 1) via the terminal P1.

The ratio between a rectified electric power and a reflected electric power is determined by the resistance of the bypass resistor 62 and the internal resistance of the diode 63. Specifically, as the resistance of the bypass resistor 62 decreases, the circuit impedance variation responsive to the state change of the transistor 61 increases and thus the modulated electric power (the reflected electric power) increases while the rectified electric power decreases.

It should be noted that the modulation may be executed by varying other parameters such as the bias voltage of the diode 63, the input signal power, or the load resistance.

## DESCRIPTION OF THE THIRD PREFERRED EMBODIMENT

A third embodiment of this invention is similar to the embodiment of Figs. 1-4 except for the design of a modulation/rectification complex circuit C.

As shown in Fig. 6, the modulation/rectification complex circuit C in the third embodiment includes terminals P1, P2, and P3. The terminal P1 leads from an antenna B1 (see Fig. 1). The terminal P2 leads to a power supply terminal of an identification code generator D (see Fig. 1). The terminal P3 leads from an output terminal of the identification code generator D. The modulation/rectification complex circuit C includes a diode 73 connected between the terminals P1 and P2. An inductor 75 forms a dc return low pass filter. One end of the inductor 75 is connected to the terminal P1, and the other end of the inductor 75 is grounded. One end of a smoothing capacitor 74 is connected to the terminal P2, and the other end of the smoothing capacitor 74 is grounded. The anode of a variable capacitance diode 71 is connected to a junction J3 between the terminal P1 and the diode 73. The cathode of the variable capacitance diode 71 is grounded via a bypass capacitor 76. An inductor 72 forms a low pass filter. One end of the inductor 72 is connected to the terminal P3, and the other end of the inductor 72 is connected to the junction between the variable capacitance diode 71 and the bypass capacitor 76.

A large part of a received interrogation signal S1 advances from the antenna B1 (see Fig. 1) into the diode 73 via the terminal P1, being rectified by the diode 73 and being smoothed by the smoothing capacitor 74 into a dc power. The dc power is fed via the terminal P2 to the identification code generator D (see Fig. 1) to activate the latter. When being activated, the identification code generator D outputs an identification information signal which is applied to the variable capacitance diode 71 via the terminal P3 and the inductor 72. As a result, the reverse bias of the variable capacitance diode 71 varies in response to the identification information signal. Thus, operating conditions of the diode 73 are changed in response to the identification information signal. Therefore, the characteristics of the reflection of the interrogation signal S1 at the modulation/rectification complex circuit C vary in response to the identification information signal. As a result, a part of the interrogation signal S1 is modulated with the identification information signal and is thus converted into a reply signal S2 containing the identification information, and the reply signal S2 is reflected and returned toward the antenna B1 (see Fig. 1) via the terminal P1.

## DESCRIPTION OF THE FOURTH PREFERRED EMBODIMENT

A fourth embodiment of this invention is similar to the embodiment of Figs. 1-4 except that a power distribution device C3 is added to a modulation/rectification complex circuit C.

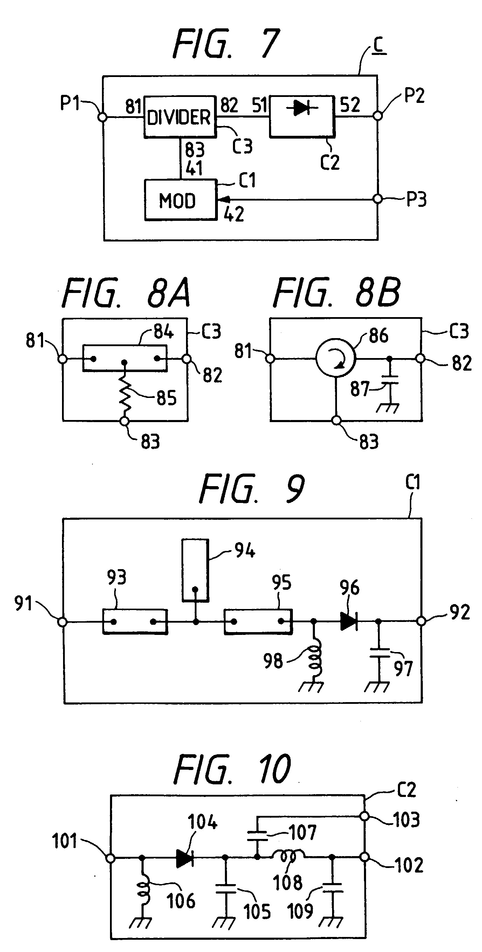

As shown in Fig. 7, the modulation/rectification complex circuit C in the fourth embodiment includes a power distribution device C3 having terminals 81, 82, and 83 which are connected to a terminal P1, a rectifier C2, and a modulator C1 respectively. The terminal P1 leads from an antenna B1 (see Fig. 1).

A received interrogation signal S1 advances from the antenna B1 to the power distribution device C3 via the terminal P1. The power distribution device C3 divides the electric power of the interrogation signal S1 into two signals which are fed to the modulator C1 and the rectifier C2 respectively. The power distribution device C3 transmits at least part of a reply signal S2 from the modulator C1 toward the antenna B1 via the terminal P1.

As shown in Fig. 8A, the power distribution device C3 includes a transmission line 84 having first and second ends which are connected to the terminals 81 and 82 respectively. The power distribution device C3 also includes a resistor 85. One end of the resistor 85 is connected to an intermediate point of the transmission line 84, and the other end of the resistor 85 is connected to the terminal 83. An electric power inputted via the terminal 81 advances along the transmission line 84 and is divided in the transmission line 84 into two, one being outputted via terminal 82 while the other passing through the resistor 85 and being outputted via the terminal 83. An electric power inputted via the terminal 83 passes through the resistor 85 and advances into the transmission line 84, being divided into two which are outputted via the terminals 81 and 82 respectively.

## DESCRIPTION OF THE FIFTH PREFERRED EMBODIMENT

A fifth embodiment of this invention is similar to the embodiment of Figs. 7 and 8A except for the design of a power distribution device C3.

As shown in Fig. 8B, the power distribution device C3 in the fifth embodiment includes a circulator 86 connected among terminals 81, 82, and 83. The power distribution device C3 also includes a capacitor 87. One end of the capacitor 87 is connected to a junction between the the circulator 86 and the terminal 82, and the other end of the capacitor 87 is grounded.

An electric power inputted via the terminal 81 advances into the circulator 86 and passes through the circulator 86, being transmitted toward the terminal 82. The capacitor 87 causes mismatching between the circulator 86 and a rectifier C2 (see Fig. 7), so that a part of the electric power is reflected at the capacitor 87 and is returned to the circulator 86 while the remaining part of the electric power is fed to the rectifier C2. The reflected electric power is directed by the circulator 86 toward the terminal 83, being outputted via the terminal 83. An electric power inputted via the terminal 83 advances into the circulator 86, being directed by the circulator 86 toward the terminal 81 and being outputted via the terminal 81.

It should be noted that the power distribution device C3 may be composed of a T-type distribution device using a micro-stripline, or a coupler.

## DESCRIPTION OF THE SIXTH PREFERRED EMBODIMENT

A sixth embodiment of this invention is similar to the embodiment of Figs. 1-4 except for the design of a modulator C1.

As shown in Fig. 9, the modulator C1 in the sixth embodiment includes terminals 91 and 92 connected to an antenna B1 and an information code generator D (see Fig. 1) respectively. The modulator C1 also includes a phase-conversion transmission line 93, a load-conversion stub 94, a load-conversion transmission line 95, a diode 96, a bypass capacitor 97, and an inductor 98. The phase-conversion transmission line 93, the load-conversion stub 94, and the load-conversion transmission line 95 are combined into a T-network. The terminal 91 leads to the anode of the diode 96 via the phase-conversion transmission line 93 and the load-conversion transmission line 95. The inductor 98 forms a low pass filter. One end of the inductor 98 is connected to a junction between the load-conversion transmission line 95 and the diode 96, and the other end of the inductor 98 is grounded. The cathode of the diode 96 is connected to the terminal 92. One end of the bypass capacitor 97 is connected to a junction between the diode 96 and the terminal 92, and the other end of the bypass capacitor 97 is grounded.

An identification information signal outputted from the identification code generator D (see Fig. 1) is transmitted to the diode 96 via the terminal 92, so that the reverse bias of the diode 96 varies in response to the identification information signal. On the other hand, a part of a received interrogation signal S1 advances from the antenna B1 (see Fig. 1) into the T-network via the terminal 91. Since the T-network is coupled to the diode 96, the previously-mentioned variation in the bias voltage of the diode 96 causes a variation in an impedance at the terminal 91. As a result, the part of the received interrogation signal S1 is modulated in accordance with the identification information signal. By the modulation, the part of the interrogation signal S1 is converted into a reply signal S2 containing the identification information. The reply signal S2 is reflected at the T-network, and is returned toward the antenna B1 (see Fig. 1) via the terminal 91.

The modulator C1 can also operate as a demodulator. Specifically, during a demodulation process, a received interrogation signal S1 is fed via the T-network to a demodulator composed of the diode 96, the inductor 98, and the capacitor 97. In the case where the interrogation signal S1 contains information, the demodulator recovers the information from the interrogation signal S1 and outputs a related information signal which is transmitted via the terminal 92. It should be noted that the modulation process is suspended during the demodulation process.

For example, the demodulated information is used for updating identification information stored in the information code generator D (see Fig. 1). In this case, a ROM storing the identification information is preferably of the electrically erasable and programmable type. The demodulated information may also be used for starting the information code generator D.

DESCRIPTION OF THE SEVENTH PREFERRED EMBODIMENT

A seventh embodiment of this invention is similar to the embodiment of Figs. 1-4 except for the design of a rectifier C2.

As shown in Fig. 10, the rectifier C2 in the seventh embodiment includes terminals 101, 102, and 103. The terminals 101 and 102 are connected to an antenna B1 and an information code generator D (see Fig. 1) respectively. The rectifier C2 also includes a diode 104, capacitors 105, 107, and 109, and inductors 106 and 108. The anode of the diode 104 is connected to the terminal 101, and the cathode of the diode 104 is connected to the terminal 102 via the inductor 108. The inductor 108 forms a low pass filter. One end of the inductor 106 is connected to the terminal 101, and the other end of the inductor 106 is grounded. The inductor 106 forms a dc return low pass filter. One end of the capacitor 105 is connected to a junction between the diode 104 and the inductor 108, and the other end of the capacitor 105 is grounded. The capacitor 105 serves as a smoothing capacitor. One end of the capacitor 107 is connected to the junction between the diode 104 and the inductor 108, and the other end of the capacitor 107 is connected to the terminal 103. The capacitor 107 forms a high pass filter. One end of the capacitor 109 is connected to the terminal 102, and the other end of the capacitor 109 is grounded. The capacitor 109 serves as a voltage stabilizing capacitor.

When an electric power containing an amplitude-modulated carrier and modulating information is fed to the terminal 101, the electric power advances into the diode 104. The electric power is converted by the diode 104 into dc components and ac components corresponding to a dc power and the demodulated information respectively. The dc components are smoothed by the LC network of the capacitors 105 and 109 and the inductor 108, being transmitted via the terminal 102 to the information code generator D (see Fig. 1) to activate the latter. The demodulated information passes through the capacitor 107, being transmitted via the terminal 103.

DESCRIPTION OF THE EIGHTH PREFERRED EMBODIMENT

An eighth embodiment of this invention is similar to the embodiment of Figs. 1-4 except for the design of a modulation/rectification complex circuit C.

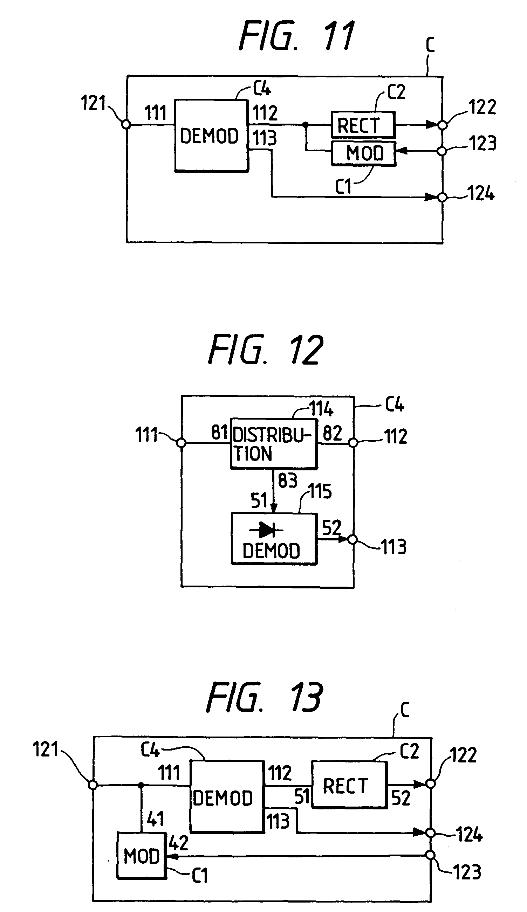

As shown in Fig. 11, the modulation/rectification complex circuit C in the eighth embodiment includes terminals 121, 122, 123, and 124. The terminal 121 leads from an antenna B1 (see Fig. 1). The terminal 122 leads to a power supply terminal of an identification code generator D (see Fig. 1). The terminal 123 leads from an output terminal of the identification code generator D. The modulation/rectification complex circuit C also includes a modulator C1, a rectifier C2, and a demodulator C4. The demodulator C4 is connected to the terminals 121 and 124, the modulator C1, and the rectifier C2. An electric energy containing information and being inputted via the terminal 121 advances into the demodulator C4. The demodulator C4 captures a part of the electric energy, and demodulates the information therefrom. The demodulator C4 outputs the demodulated information to the terminal 124. The remaining part of the electric power passes through the demodulator C4, being fed to the modulator C1 and the rectifier C2. The rectifier C2 converts the input electric power into a dc power which is fed via the terminal 122 to the identification code generator D to activate the latter. The modulator C1 receives an identification information signal from the identification code generator D via the terminal 123, and modulates the input electric power with the identification information signal to generate a reply signal S2. The reply signal S2 moves back from the modulator C1 toward the antenna B1 via the demodulator C4.

As shown in Fig. 12, the demodulator C4 includes terminals 111, 112, and 113. The terminal 111 is connected to the terminal 121 (see Fig. 11). The terminal 112 is connected to the modulator C1 and the rectifier C2 (see Fig. 11). The terminal 113 is connected to the terminal 124 (see Fig. 11). The demodulator C4 also includes a power distribution device 114 and a demodulating section 115. The power distribution device 114 is connected between the terminals 111 and 112. The demodulating section 115 is connected between the power distribution device 114 and the terminal 113. The power distribution device 114 captures a part of an electric power flowing between the terminals 111 and 114, and feeds the captured part of the electric power to the demodulating section 115. The demodulating section 115 demodulates information from the input electric power, and outputs the demodulated information to the terminal 113. The power distribution device 114 can be composed of the power distribution device C3 of Fig. 8A or Fig. 8B. The demodulating section 115 can be composed of a network including a diode, an inductor, and a capacitor which is similar to the internal design of the rectifier C2 of Fig. 4.

## DESCRIPTION OF THE NINTH PREFERRED EMBODIMENT

A ninth embodiment of this invention is similar to the embodiment of Figs. 11 and 12 except for a design change indicated hereinafter.

As shown in Fig. 13, a modulation/rectification complex circuit C in the ninth embodiment includes terminals 121, 122, 123, and 124. The terminal 121 leads from an antenna B1 (see Fig. 1). The terminal 122 leads to a power supply terminal of an identification code generator D (see Fig. 1). The terminal 123 leads from an output terminal of the identification code generator D. The modulation/rectification complex circuit C also includes a modulator C1, a rectifier C2, and a demodulator C4. The demodulator C4 is connected between the modulator C1 and the rectifier C2. Specifically, the demodulator C4 is connected to the terminals 121 and 124, the modulator C1, and the rectifier C2. The modulator C1 is connected to the terminals 121 and 123, and the demodulator C4. The rectifier C2 is connected between the demodulator C4 and the terminal 122.

An electric energy containing information and being inputted via the terminal 121 advances into the modulator C1 and the demodulator C4. The demodulator C4 captures a part of the incoming electric energy, and demodulates the information therefrom. The demodulator C4 outputs the demodulated information to the terminal 124. The remaining part of the incoming electric power passes through the demodulator C4, being fed to the rectifier C2. The rectifier C2 converts the input electric power into a dc power which is fed via the terminal 122 to the identification code generator D to activate the latter. The modulator C1 receives an identification information signal from the identification code generator D via the terminal 123. and modulates the incoming electric power with the identification information signal to generate a reply signal S2. The reply signal S2 moves back from the modulator C1 toward the antenna B1 via the terminal 121.

**Claims**

1. A movable-object identification system comprising an interrogator (A) for transmitting an interrogation signal (S1) having a predetermined frequency, and a responder (B) mounted on a movable object for transmitting a reply signal (S2) in response to the interrogation signal, the reply signal (S2) containing predetermined identification information (ID), the responder (B) comprising:

- an antenna arrangement (B1) for receiving the interrogation signal from the interrogator (A), and for radiating the reply signal (S2);

- an input circuit (C2) coupled to said antenna arrangement (B1) and adapted to derive, from a first portion of the electric power of the received interrogation signal, electric driving power for generating said identification information (ID);

- an identification information signal generating circuit (D) driven by the electric driving power derived by said input circuit (C2) and generating said predetermined identification information (ID);

- a modulating circuit (C1) connected to said identification information signal generating circuit (D) and coupled to said antenna arrangement (B1) for modulating said identification information onto a signal derived from a second portion of the electric power of the received interrogation signal for generating said reply signal (S2), said modulating circuit (C1) comprising an impedance element variable, within a predetermined range, in response to the identification information signal from said identification information signal generating circuit (D);

*characterized in that*

- said antenna arrangement consists of an antenna (B1) for receiving said interrogation signal (S1) and for transmitting said reply signal (S2);

- said input circuit (C2) is adapted to rectify said first portion of the electric power of the received interrogation signal, thereby generating a DC electric power fed to said identification information signal generating circuit (D), said input circuit (C2) having an impedance approx. equal to the impedance of the antenna (B1);

- said modulating circuit (C1) is connected to a connecting point (JO) between the antenna (B1) and the input circuit (C2);

- the impedance of the modulating circuit (C1) as viewed from said connection point (JO) and being variable in the predetermined range, is chosen so that said first portion of the electric power of the received interrogation signal is always greater than said second portion of the electric power of the received interrogation signal; and

- said identification information signal generating circuit (D) varies the impedance of the modulating circuit (C1) and, thereby varies the resultant reflection co-efficient effective for the received interrogation signal at said connecting point (JO).

**Patentansprüche**

1. System zur Identifizierung bewegbarer Objekte mit einer Abfrageeinrichtung (A) zum Aussenden eines Abfragesignales (S1) mit einer vorbestimmten Frequenz, und einem Antwortgerät (B), das auf einem bewegbaren Objekt montiert ist, zum Aussenden eines Antwortsignales (S2) in Abhängigkeit von dem Abfragesignal, wobei das Antwortsignal (S2) eine vorbestimmte Identifizierungsinformation (ID) enthält und das Antwortgerät (B) folgendes umfaßt:

- eine Antennenanordnung (B1) zum Empfang des Abfragesignals von der Abfrageeinrichtung (A) und zur Abstrahlung des Antwortsignals (S2);

- eine Eingangsschaltung (C2), die mit der Antennenanordnung (B1) gekoppelt und so ausgebildet ist, daß sie von einem ersten Teil der elektrischen Leistung des empfangenen Abfragesignals elektrische Antriebsleistung zur Erzeugung der genannten Identifizierungsinformation (ID) ableitet;

- eine ein Identifizierungsinformationssignal erzeugende Schaltung (D), die durch die elektrische Antriebsleistung betrieben wird, die durch die genannte Eingangsschaltung (C2) abgeleitet worden ist, und welche die genannte vorbestimmte Identifizierungsinformation (ID) erzeugt;

- eine Modulationsschaltung (C1), welche mit der das Identifizierungsinformationssignal erzeugenden Schaltung (D) verbunden und mit der Antennenanordnung (B1) gekoppelt ist, um die Identifizierungsinformation auf ein Signal aufzumodulieren, das von einem zweiten Teil der elektrischen Leistung des empfangenen Abfragesignals abgeleitet ist, um das genannte Antwortsignal (S2) zu erzeugen, wobei die Modulationsschaltung (C1) ein Impedanzelement enthält, das innerhalb eines vorbestimmten Bereiches in Abhängigkeit von dem Identifizierungsinformationssignal von der das Identifizierungsinformatinssignal erzeugenden Schaltung (D) veränderbar ist;

*dadurch gekennzeichnet, daß*

- die genannte Antennenanordnung aus einer Antenne (B1) zum Empfang des genannten Abfragesignals (S1) und zum Aussenden des genannten Antwortsignals (S2) besteht;

- die genannte Eingangsschaltung (C2) so ausgebildet ist, daß sie den genannten ersten Teil der elektrischen Leistung des empfangenen Abfragesignals gleichrichtet und dadurch eine elektrische Gleichstromleistung erzeugt, welche der das genannte Identifizierungsinformationssignal erzeugenden Schaltung (D) zugeführt wird, wobei die Eingangsschaltung (C2) eine Impedanz annähernd gleich der Impedanz der Antenne (B1) aufweist;

- die Modulationsschaltung (C1) mit einem Verbindungspunkt (JO) zwischen der Antenne (B1) und der EingangsSchaltung (C2) verbunden ist;

- die Impedanz der Modulationsschaltung (C1) von dem genannten Verbindungspunkt (JO) aus gesehen und bei ihrer Veränderlichkeit in dem vorbestimmten Bereich so gewählt ist, daß der genannte erste Teil der elektrischen Leistung des empfangenen Abfragesignals stets größer als der genannte zweite Teil der elektrischen Leistung des empfangenen Abfragesignals ist; und

- die genannte, das Identifizierungsinformationssignal erzeugende Schaltung (D) die Impedanz der Modulationsschaltung (C1) verändert und dadurch den resultierenden Reflexionskoeffizienten verändert, der an dem genannten Verbindungspunkt (JO) für das empfangene Abfragesignal wirksam ist.

**Revendications**

1. Système d'identification d'objets mobiles comprenant un interrogateur (A) pour transmettre un signal d'interrogation (S1) ayant une fréquence prédéterminée, et un répondeur (B) monté sur un objet mobile afin de transmettre un signal de réponse (S2) en réponse au signal d'interrogation, le signal de réponse (S2) contenant une information d'identification prédéterminée (ID), le répondeur (B) comportant :

- un agencement d'antenne (B1) pour recevoir le signal d'interrogation provenant de l'interrogateur (A), et pour rayonner le signal de réponse (S2);

- un circuit d'entrée (C2) couplé audit agencement d'antenne (B1) et destiné à dériver, à partir d'une première partie de l'énergie électrique du signal d'interrogation reçu, une énergie électrique d'entraînement pour produire ladite information d'identification (ID);

- un circuit de génération de signal d'information d'identification (D) attaqué par l'énergie électrique d'entraînement dérivée par ledit circuit d'entrée (C2) et produisant ladite information d'identification prédéterminée (ID);

- un circuit de modulation (C1) connecté audit circuit de génération de signal d'information d'identification (D) et couplé audit agencement d'antenne (B1) pour moduler ladite information d'identification sur un signal dérivé d'une seconde partie de l'énergie électrique du signal d'interrogation reçu afin de produire ledit signal de réponse (S2), ledit circuit de modulation (C1) comprenant un élément à impédance variable, dans une gamme prédéterminée, en réponse au signal d'information d'identification provenant dudit circuit de génération de signal d'information d'identification (D);

caractérisé en ce que :

- ledit agencement d'antenne est constitué d'une antenne (B1) pour recevoir ledit signal d'interrogation (S1) et pour transmettre ledit signal de réponse (S2);

- ledit circuit d'entrée (C2) est destiné à redresser ladite première partie de l'énergie électrique du signal d'interrogation reçu, d'où la production d'une énergie électrique à courant continu appliquée audit circuit de génération de signal d'information d'identification (D), ledit circuit d'entrée (C2) ayant une impédance approximativement égale à l'impédance de l'antenne (B1);

- ledit circuit de modulation (C1) est connecté à un point de jonction (JO) entre l'antenne (B1) et le circuit d'entrée (C2);

- l'impédance du circuit de modulation (C1) telle qu'elle est vue à partir dudit point de jonction (JO) et étant variable dans la gamme prédéterminée, est choisie de façon que ladite première partie de l'énergie électrique du signal d'interrogation reçu soit toujours supérieure à ladite seconde partie de l'énergie électrique du signal d'interrogation reçu; et

- ledit circuit de génération de signal d'information d'identification (D) fait varier l'impédance du circuit de modulation (C1) et par conséquent fait varier le coefficient de réflexion résultant effectif pour le signal d'interrogation reçu audit point de jonction (JO).

# FIG. 1

# FIG. 2

EP 0 480 413 B1

# FIG. 3

# FIG. 4

# FIG. 5

# FIG. 6

# FIG. 7

# FIG. 8A

# FIG. 8B

# FIG. 9

# FIG. 10

## FIG. 11

## FIG. 12

## FIG. 13